# EUROPEAN PATENT SPECIFICATION

(11) **EP 3 757 388 B1**
(45) Date of publication and mention of the grant of the patent: **12.11.2025**
(21) Application number: 20170550.6
(22) Date of filing: 21.04.2020
(51) Int. Cl.: F04B 39/04, F16J 15/00, F04B 53/16, F04B 53/14, F04B 53/02, F16J 9/28, F16J 15/56

(54) **COMPRESSOR**
VERDICHTER
COMPRESSEUR

(30) Priority: 26.06.2019 JP 2019118278
(43) Date of publication of application: 30.12.2020
(73) Proprietor: Kabushiki Kaisha Kobe Seiko Sho (Kobe Steel, Ltd.), Kobe-shi, Hyogo 651-8585 (JP)
(72) Inventor: KANEI, Naofumi, Takasago-shi,, Hyogo 676-8670 (JP); OTSUKA, Tomohiro, Takasago-shi,, Hyogo 676-8670 (JP)
(74) Representative: TBK

(56) References cited:
- EP-A2- 0 833 054
- WO-A1-03/056214
- CN-A- 108 005 875
- CN-U- 202 108 692
- JP-A- 2009 180 090
- JP-A- H1 037 857
- JP-A- S62 184 275

## Description

### BACKGROUND OF THE INVENTION

### (FIELD OF THE INVENTION)

The present invention relates to a compressor configured to compress gas.

### (DESCRIPTION OF THE RELATED ART)

JP H10 37857 A comprises a compressor according to the preamble of claim 1. Further compressors including first and second sealing parts are known from JP S62 184275 A and CN 108 005 875 A. JP 2009 180090 A discloses a fluid pump including first and second sealing parts.

A conventional compressor configured to reciprocate a piston in a cylinder and compress gas introduced into a compression chamber formed in the cylinder has been known. Plural piston rings are attached to an outer circumference of the piston to be aligned in an axial direction of the cylinder in order to prevent the compressed gas obtained in the compression chamber from leaking out through a clearance between the outer circumference of the piston and an inner circumferential surface of the cylinder (see JP 2015-40519 A and WO 2016/208698).

Since suction and discharge of gas are repeated in the compression chamber, pressure in the compression chamber periodically varies, and thus a large impact force periodically acts on the piston ring that is located near the compression chamber. As a result of the periodical application of the impact force on the piston ring, the piston ring may deform with time in a direction in which the impact force acts. As a result of the deformation of the piston ring with time, the outer circumference of the piston ring is separated from the inner circumferential surface of the cylinder; therefore, the deformed piston ring may lose the desired sealing performance to the piston ring. Further, rod packings may also have the same problem.

It is the object of the present invention to provide techniques by which sealing performance of a compressor can be maintained over a long period of time.

The object of the invention is achieved with a compressor according to claim 1. Further advantageous developments of the invention are subject-matter of the dependent claims.

A compressor according to the present invention is configured to compress gas. The compressor includes: a cylinder part; a piston disposed in the cylinder part to form in the cylinder part a compression chamber in which the gas is compressed, the piston being configured to compress the gas in the compression chamber; a first sealing part attached to an outer circumference of the piston and formed mainly containing at least one type of component that is selected from a group of polyetheretherketone, polyimide, and polybenzimidazole; and a second sealing part located more separated from the compression chamber than the first sealing part is from the compression chamber and attached to the outer circumference of the piston, the second sealing part having a hardness equal to or smaller than that of the first sealing part.

According to the configuration above, the first sealing part and the second sealing part can maintain the desired sealing performance to the first sealing part and the second sealing part over a long period of time.

Regarding the configuration above, the compressor may further include a third sealing part located on the opposite side of the second sealing part from the first sealing part in an axial direction of the cylinder part and attached to the outer circumference of the piston. The piston and the cylinder part may form a non-compression chamber located on the opposite side of the piston from the compression chamber. The third sealing part may be located closer to the non-compression chamber than the second sealing part is to the non-compression chamber and may be formed mainly containing at least one type of component that is selected from a group of polyetheretherketone, polyimide, and polybenzimidazole.

According to the configuration above, the third sealing part can maintain the desired sealing performance to the third sealing part over a long period of time.

Regarding the configuration above, according to the present invention, the first sealing part includes two ring elements respectively extending circumferentially along the outer circumference of the piston. Fitting openings extending from an outer circumference to an inner circumference of each of the two ring elements are respectively formed in the two ring elements. The two ring elements are overlapped in the axial direction of the cylinder part and attached to the outer circumference of the piston such that the fitting openings of the two ring elements are not overlapped with each other.

According to the configuration above, the ring element located separated from the compression chamber can prevent passing of gas through the fitting opening of the ring element located near the compression chamber.

Regarding the configuration above, according to the present invention, the second sealing part includes: a soft ring element formed mainly containing at least one type of component that is selected from a group of polytetrafluoroethylene and modified polytetrafluoroethylene; and a hard ring element formed mainly containing at least one type of component that is selected from a group of polyetheretherketone, polyimide, and polybenzimidazole, the hard ring element being overlapped with the soft ring element from the opposite side from the compression chamber.

According to the configuration above, even when gas pressure is applied through the soft ring element to the hard ring element, the hard ring element does not easily deform; therefore, deformation of the soft ring element can be prevented.

Regarding the configuration above, the piston and the cylinder may form the compression chamber of a first compression chamber and a second compression chamber that is located on the opposite side from the first compression chamber in the axial direction of the cylinder part. The first sealing part may include a plurality of the first sealing parts respectively located closer to the first compression chamber and the second compression chamber than the second sealing part is to the first compression chamber and the second compression chamber, the first sealing parts being attached to the outer circumference of the piston.

According to the configuration above, the first sealing part and the second sealing part can maintain the desired sealing performance to the first sealing part and the second sealing part over a long period of time.

Regarding the configuration above, the compressor may further include a crank mechanism formed to reciprocate the piston in the cylinder part.

According to the configuration above, the first sealing part and the second sealing part can maintain the desired sealing performance to the first sealing part and the second sealing part over a long period of time even under an impact force generated by reciprocating motion of the piston driven by the crank mechanism.

Regarding the configuration above, the compressor may include: a piston rod configured to transmit driving force of the crank mechanism to the piston; a first packing part configured to seal a space between the cylinder part and an outer circumference of the piston rod; and a second packing part located closer to the crank mechanism than the first packing part is to the crank mechanism and configured to seal a space between the cylinder part and the outer circumference of the piston rod. The first packing part may be formed mainly containing at least one type of component that is selected from a group of polyetheretherketone, polyimide, and polybenzimidazole. The second packing part may be softer than the first packing part.

According to the configuration above, the first packing part and the second packing part can maintain the desired sealing performance to the first packing part and the second packing part over a long period of time.

The foregoing techniques enable the sealing performance of the compressor to be maintained over a long period of time.

### BRIEF DESCRIPTION OF THE DRAWINGS

FIG. 1 is a schematic cross-sectional view of a reciprocating compressor according to a first embodiment of the present invention.
FIG. 2 is a schematic cross-sectional view of a piston of the reciprocating compressor.
FIG. 3A is a schematic plan view of a ring element of the reciprocating compressor.
FIG. 3B is a schematic plan view of a ring element of the reciprocating compressor.
FIG. 4 is a schematic cross-sectional view of a reciprocating compressor according to a second embodiment of the present invention.
FIG. 5 is a schematic cross-sectional view of a reciprocating compressor according to a third embodiment of the present invention.
FIG. 6 is a schematic cross-sectional view of a reciprocating compressor according to a fourth embodiment not claimed but useful for understanding the present invention.

### DESCRIPTION OF THE PREFERRED EMBODIMENTS

### [First Embodiment]

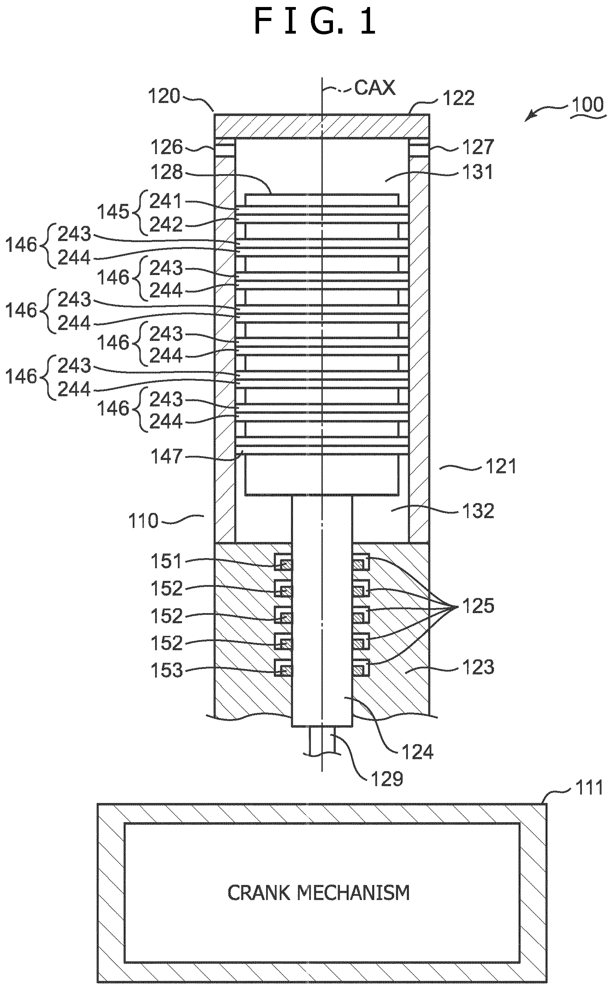

FIG. 1 is a schematic cross-sectional view of a reciprocating compressor (hereinafter, referred to as "compressor 100") according to a first embodiment of the present invention. The compressor 100 will be described with reference to FIG. 1. In the following descriptions, direction indicators such as "up" and "down" are used. The direction indicators are intended only to clarify explanations and should not be interpreted in a limited way.

The compressor 100 includes a cylinder structure 110, a crank case 111 disposed below the cylinder structure 110, and a crank mechanism housed in the crank case 111.

The cylinder structure 110 includes a cylinder 121 and a cylinder part 120 provided with a pair of cylinder heads 122, 123 respectively fixed to upper and lower ends of the cylinder 121. An inflow port 126 and an outflow port 127 are formed near the upper end of the cylinder 121. The inflow port 126 allows inflow of gas to the cylinder 121, and the outflow port 127 allows outflow of gas from the cylinder 121. In FIG. 1, the upper cylinder head 122 closes an upper end opening of the cylinder 121. A through-hole 124 formed to extend in a center axis CAX is formed in the lower cylinder head 123. Plural annular grooves 125 formed aligned at intervals in a direction in which the center axis CAX extends are formed on an inner circumferential surface of the lower cylinder head 123. The direction in which the center axis CAX extends will be referred to as "axial direction" in the following descriptions. A space enclosed by the cylinder 121 and the cylinder heads 122, 123 will be referred to as "interior space" in the following descriptions.

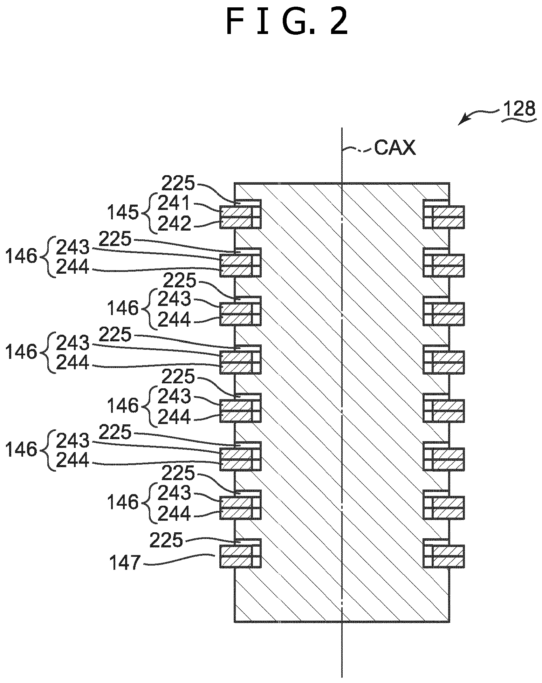

The cylinder structure 110 further includes a piston 128 arranged in the interior space and a piston rod 129 disposed to extend downward from a lower end surface of the piston 128 in the center axis CAX. FIG. 2 is a schematic cross-sectional view of the piston 128. The piston 128 and the piston rod 129 will be described with reference to FIGS. 1 and 2.

The piston 128 is coaxially arranged with the cylinder 121. The axial length of the piston 128 is smaller than the axial length of the cylinder 121. Therefore, the interior space is divided into spaces on the upper and lower sides of the piston 128. The upper space will be referred to as "compression chamber 131" in the following descriptions. The lower space will be referred to as "non-compression chamber 132" in the following descriptions. The non-compression chamber 132 is connected to an exterior tank (not illustrated), and the exterior tank is connected to a flow passage on the intake side of the cylinder 121.

The compression chamber 131 is connected to the inflow port 126 and the outflow port 127. Corresponding check valves (not illustrated) are attached to the inflow port 126 and the outflow port 127. The check valve for the inflow port 126 allows inflow of gas to the compression chamber 131 while not allowing outflow of gas from the compression chamber 131. The check valve for the outflow port 127 allows outflow of gas from the compression chamber 131 when pressure of the gas in the compression chamber 131 exceeds a certain threshold. Meanwhile, the check valve for the outflow port 127 does not allow inflow of gas to the compression chamber 131. Compression treatment is performed in the compression chamber 131.

An outer diameter of the piston 128 is smaller than an inner diameter of the cylinder 121. Therefore, an annular clearance is formed between an outer circumference of the piston 128 and an inner circumferential surface of the cylinder 121. Additionally, in FIG. 1 or the like, the clearance is overdrawn than in reality.

Plural annular grooves 225 disposed to extend in a circumferential direction of the piston 128 are formed on the outer circumference of the piston 128. The center of each of the annular grooves 225 is substantially coincided with the center axis CAX. The annular grooves 225 are formed at intervals in the axial direction.

The piston rod 129 is disposed to pass through the through-hole 124 of the lower cylinder head 123 and extend downward through the cylinder head 123. A lower end of the piston rod 129 is connected to the crank mechanism in the crank case 111. Driving force of the crank mechanism is transmitted via the piston rod 129 to the piston 128.

The cylinder structure 110 further includes a part configured to prevent gas in the compression chamber 131 from leaking out to the crank case 111. The cylinder structure 110 includes first to third sealing parts 145 to 147 attached to the outer circumference of the piston 128 as parts configured to prevent the gas from leaking out from the compression chamber 131 to the non-compression chamber 132. The cylinder structure 110 includes plural rod packings arranged in the annular grooves 125 of the lower cylinder head 123 as parts configured to prevent the gas from leaking out from the non-compression chamber 132 to the crank case 111. The rod packings configure a first packing part 151, a second packing part 152, and a third packing part 153.

The first sealing part 145 is formed of a piston ring arranged on the highest level (i.e., arranged closest to the compression chamber 131) among the first to third sealing parts 145 to 147. The piston ring forming the first sealing part 145 has a substantially rectangular cross-section and an upper-temperature limit of 200 degrees C or higher. The piston ring of the first sealing part 145 is fitted into the annular groove 225 on the outer circumference of the piston 128 such that a lower surface of the piston ring is in contact with a groove side surface of the piston 128, which forms a side portion of the annular groove 225. The piston ring of the first sealing part 145 protrudes outward from an outer circumferential surface of the piston 128. An outer circumferential surface of the piston ring of the first sealing part 145 is in contact with the inner circumferential surface of the cylinder 121. An inner diameter of the piston ring of the first sealing part 145 is set at a value greater than an outer diameter of a bottom portion of the annular groove 225. Therefore, a clearance is formed between an inner circumferential surface of the piston ring of the first sealing part 145 and the bottom portion of the annular groove 225. A thickness of the piston ring of the first sealing part 145 may be smaller than a groove width of each of the plural annular grooves 225. Therefore, a clearance is formed above an upper surface of the piston ring of the first sealing part 145 in the annular groove 225.

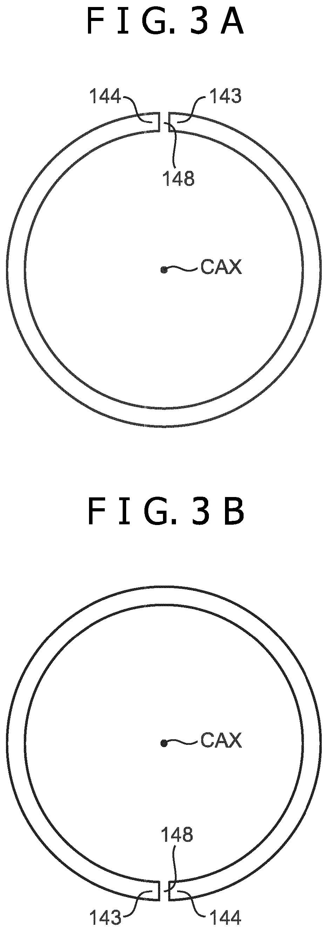

The piston ring of the first sealing part 145 includes a pair of ring elements 241, 242 overlapped in the axial direction. The ring element 241 is arranged closer to the compression chamber 131 than the ring element 242 is to the compression chamber 131. The ring elements 241, 242 of the first sealing part 145 are fitted into the annular groove 225. A schematic plan view of the upper ring element 241 is illustrated in FIG. 3A. A schematic plan view of the lower ring element 242 is illustrated in FIG. 3B. The ring element 241 is arranged closer to the compression chamber 131 than the ring element 242 is to the compression chamber 131. Each of the ring elements 241, 242 is formed of a sealing material.

Each of the ring elements 241, 242 is an annular strip member. Fitting openings 148 disposed to extend from an outer circumference to an inner circumference of each of the ring elements 241, 242 are respectively formed in the ring elements 241, 242. Therefore, each of the ring elements 241, 242 is different from an endless ring member in that each of the ring elements 241, 242 includes a first end portion 143 and a second end portion 144 which are located next to each other in a state where the fitting opening 148 is interposed between the first end portion 143 and the second end portion 144. Each of the ring elements 241, 242 is circumferentially disposed along the outer circumference of the piston 128 to extend over a circular circumferential section from the first end portion 143 to the second end portion 144.

The second end portion 144 is slightly separated from the first end portion 143. The fitting opening 148 located between the first end portion 143 and the second end portion 144 is inferior in sealing performance compared with the circumferential section along which a sealing member continuously extends in a circular shape.

The circumferential position of the fitting opening 148 of the ring element 241 differs from the circumferential position of the fitting opening 148 of the ring element 242. In other words, the orientation of the ring elements 241, 242 is set such that the fitting openings 148 of the ring elements 241, 242 are not overlapped. For example, as illustrated in FIGS. 3A and 3B, the orientation of the ring elements 241, 242 may be set such that the fitting openings 148 of the ring elements 241, 242 are located differently from each other by approximately 180 degrees around the center axis CAX.

The first sealing part 145 is formed of a hard sealing material. The hardness may be evaluated by using Rockwell hardness obtained based on a method compliant to JIS K7 202-2 or JIS Z2245 or may be evaluated by using Durometer hardness obtained based on a method compliant to JIS K6253 or JIS K7215. Alternatively, the hardness may be evaluated by Vickers hardness or other hardness tests.

Each of the ring elements 241, 242 is formed mainly containing at least one type of sealing material selected from thermosetting or thermoplastic polyimide (hereinafter referred to as "PI"), polyetheretherketone (hereinafter referred to as "PEEK"), and polybenzimidazole (hereinafter referred to as "PBI"). Each of the ring elements 241, 242 is formed such that the tensile strength thereof is 30 Mpa or greater. The sealing member selected as a main component may be one of the materials above or a combination thereof.

The same sealing material may be applied as a main component of the ring elements 241, 242. Alternatively, the ring elements 241, 242 may mainly contain different sealing materials from each other. For example, a main component of the ring elements 241, 242 may be a combination of PI and PEEK. Alternatively, a main component of the upper ring element 241 may be a combination of PI and PEEK, and meanwhile a main component of the lower ring member 242 may be a combination of PEEK and PBI.

An additive is added to each of the ring elements 241, 242. The term "main component" means that a ratio of the sealing member selected as a main component occupied in each of the ring elements 241, 242 is greater than a ratio of the additive added to each of the ring elements 241, 242. When plural sealing materials are selected as a main component, the term "main component" means that a total ratio of the sealing materials selected as a main component occupied in each of the ring elements 241, 242 is greater than a ratio of the additive added to each of the ring elements 241, 242.

The additive is added to each of the ring elements 241, 242 in order to increase lubricity and/or moldability of the first sealing part 145. Carbon filler is suitably applicable as the additive to increase lubricity. The carbon filler may be graphite or carbon fiber. The carbon fiber may be PAN (polyacrylonitrile) based carbon fiber or pitch-based carbon fiber. The carbon filler is added in a range of 5% by mass or greater to 40% by mass or smaller to each of the ring elements 241, 242. Polyamide-imide may be applied as the additive to increase moldability. When two or more types of additives are added, the term "ratio of the additive" means an occupied ratio of the sum of the additives in each of the ring elements 241, 242.

The third sealing part 147 is formed of a piston ring arranged on the lowest level among the first to third sealing parts 145 to 147. The piston ring forming the third sealing part 147 faces the non-compression chamber 132. The structure of the piston ring of the third sealing part 147 is similar to the structure of the piston ring of the first sealing part 145. Descriptions of the structure of the piston ring of the first sealing part 145 are incorporated in the piston ring of the third sealing part 147.

For a material of ring elements of the piston ring of the third sealing part 147, the ring elements of the third sealing part 147 are the same as the ring elements 241, 242 of the first sealing part 145. In other words, each of the ring elements of the third sealing part 147 is formed mainly containing at least one type of sealing material selected from PI, PEEK, and PBI. The ring elements of the third sealing part 147 may have the same composition as or different composition from that of the ring elements 241, 242 of the first sealing part 145. For example, when PI is selected as a main component of the ring elements 241, 242 of the first sealing part 145, PI or PBI may be selected as a main component of the ring elements of the third sealing part 147.

The second sealing part 146 includes plural piston rings arranged between the first sealing part 145 and the third sealing part 147 at intervals in the axial direction. In other words, the second sealing part 146 is arranged more separated from the compression chamber 131 than the first sealing part 145 is from the compression chamber 131, and are more separated from the non-compression chamber 132 than the third sealing part 147 is from the non-compression chamber 132. Each of the piston rings of the second sealing part 146 is similar in structure to the piston rings of the first sealing part 145 and the third sealing part 147, but is different in material from the piston rings of the first sealing part 145 and the third sealing part 147.

The piston ring of the second sealing part 146 as a whole is softer than the piston rings of the first sealing part 145 and the third sealing part 147. The upper ring element of the piston ring of the second sealing part 146 will be referred to as "soft ring element 243" in the following descriptions. The lower ring element of the piston ring of the second sealing part 146 will be referred to as "hard ring element 244" in the following descriptions. The soft ring element 243 is attached to the outer circumference of the piston 128 to be located closer to the compression chamber 131 than the hard ring element 244 is to the compression chamber 131. The soft ring element 243 may be made of a material softer than the hard ring element 244 or may be the same material as the hard ring element 244 when having sufficient resistance to pressure.

The soft ring element 243 is formed mainly containing at least one type of sealing material selected from polytetrafluoroethylene (hereinafter referred to as "PTFE") and modified polytetrafluoroethylene (hereinafter referred to as "modified PTFE"). The modified PTFE is a material obtained by replacing fluorine of PTFE by a certain functional group. The sealing member selected as a main component may be one of the materials above or a combination thereof.

A main component of the hard ring element 244 of the second sealing part 146 is at least one type of PI, PEEK, and PBI in the same way as a main component of the ring elements 241, 242 of the first sealing part 145. Descriptions of the composition of the ring elements 241, 242 are incorporated in the hard ring element 244.

An additive is also added to each of the soft ring element 243 and the hard ring element 244. Descriptions of the additive of the first sealing part 145 are incorporated in the soft ring element 243 and the hard ring element 244.

The first packing part 151 is formed of a rod packing arranged on the highest level among the first to third packing parts 151 to 153. The rod packing of the first packing part 151 is formed such that an inner circumference of the rod packing is in contact with an outer circumferential surface of the piston rod 129. The rod packing of the first packing part 151 is fitted into the annular groove 125 such that a lower surface of the rod packing is in contact with a groove side surface which forms a side portion of the annular groove 125 of the cylinder head 123. A thickness of the rod packing of the first packing part 151 is set at a value smaller than a width of the annular groove 125. An outer diameter of the rod packing of the first packing part 151 is set at a value smaller than an outer diameter of the annular groove 125.

The rod packing of the first packing part 151 is different in inner and outer diameters from the piston ring of the first sealing part 145, but is similar in structure and material to the piston ring of the first sealing part 145. Descriptions of the structure and material of the piston ring of the first sealing part 145 are incorporated in the rod packing of the first packing part 151.

The third packing part 153 is formed of a rod packing arranged on the lowest level among the first to third packing parts 151 to 153. The third packing part 153 is similar in structure and material to the rod packing of the first packing part 151.

The second packing part 152 includes plural rod packings arranged between the first packing part 151 and the third packing part 153. The second packing part 152 is arranged closer to the crank mechanism than the first packing part 151 is to the crank mechanism. The third packing part 153 is arranged closer to the crank mechanism than the second packing part 152 is to the crank mechanism.

The rod packings forming the second packing part 152 are different in inner and outer diameters from the piston ring of the second sealing part 146, but are similar in structure and material to the piston ring of the second sealing part 146. Descriptions of the structure and material of the piston ring of the second sealing part 146 are incorporated in the rod packings forming the second packing part 152.

The crank mechanism is configured by applying a crankshaft (not illustrated) and a connecting rod (not illustrated) in the crank case 111. The crank mechanism is configured to convert rotary motion of the crankshaft into vertical linear reciprocating motion. The crank mechanism is connected to the lower end of the piston rod 129. Therefore, the reciprocating motion generated by the crank mechanism is transmitted to the piston rod 129.

When the piston rod 129 reciprocates, the piston 128 connected to an upper end of the piston rod 129 also reciprocates. The compression chamber 131 is filled with gas through the inflow port 126 during the period in which the piston 128 is moving from a top dead point to a lower dead point. Afterward, the piston 128 moves toward the top dead point, and thus the gas filled in the compression chamber 131 is compressed.

During the period in which the piston 128 is moving from the top dead point to the lower dead point, the first to third sealing parts 145 to 147 attached to the outer circumference of the piston 128 are brought into slidable contact with the inner circumferential surface of the cylinder 121. At this time, the carbon filler applied as the aforementioned additive forms a film having a low friction coefficient on the inner circumferential surface of the cylinder 121.

While the piston 128 is moving toward the top dead point, the non-compression chamber 132 expands. Therefore, pressure in the non-compression chamber 132 drastically decreases compared with pressure in a space between the second sealing part 146 and the third sealing part 147.

The maintenance function of sealing performance of the first to third sealing parts 145 to 147 will be described below.

The first sealing part 145 receives the largest force (gas pressure). The first sealing part 145 is formed mainly containing a relatively hard sealing material and thus does not easily deform even when a large force repeatedly acts on the first sealing part 145. Therefore, the first sealing part 145 can maintain, over a long period of time, a sealing shape with which an outer circumference of the first sealing part 145 is entirely brought into slidable contact with the inner circumferential surface of the cylinder 121. In other words, the first sealing part 145 can exert the desired sealing performance to the first sealing part 145 over a long period of time.

During the period in which the first sealing part 145 maintains the sealing shape, the amount of gas passing through the first sealing part 145 is small. Therefore, pressure in plural spaces formed between the plural piston rings forming the second sealing part 146 arranged below the first sealing part 145 does not excessively increase. An excessive deformation of the piston rings does not occur, and thus the piston rings can maintain the sealing shapes.

The soft ring element 243 of the second sealing part 146 mainly contains a relatively soft sealing material; therefore, an outer circumference of the soft ring element 243 can closely adhere to the inner circumferential surface of the cylinder 121. Consequently, the second sealing part 146 can exert superior sealing performance compared with the first sealing part 145.

The soft ring element 243 easily deforms while contributing to the superior sealing performance. However, the hard ring element 244 is overlapped with a lower surface of the soft ring element 243; therefore, deformation of the soft ring element 243 is prevented. When gas pressure acting downward is received by the soft ring element 243, the soft ring element 243 is pressed against the hard ring element 244. The hard ring element 244 mainly contains a hard sealing material in the same way as the first sealing part 145 and thus can prevent deformation of the soft ring element 243. Therefore, the second sealing part 146 can also maintain a sealing shape against gas pressure over a long period of time in the same way as the first sealing part 145.

An upper surface of the third sealing part 147 is exposed to gas pressure sequentially passed through the first sealing part 145 and the second sealing part 146. Meanwhile, a lower surface of the third sealing part 147 is exposed to a low-pressure environment in the non-compression chamber 132. Therefore, a pressure difference generated between the upper surface and the lower surface of the third sealing part 147 is greater than a pressure difference generated between an upper surface and a lower surface of the piston ring forming the second sealing part 146. As a result, a larger downward force acts on the third sealing part 147 than on the second sealing part 146. However, the third sealing part 147 is formed of a hard sealing material in the same way as the first sealing part 145 and thus can resist the large force caused by the pressure difference over a long period of time. In other words, the third sealing part 147 can maintain a sealing shape over a long period of time in the same way as the first sealing part 145.

Each of the ring elements of the first to third sealing parts 145 to 147 is different from an endless ring member in that the ring element includes the first end portion 143 and the second end portion 144. When the ring element is deformed such that the second end portion 144 separates from the first end portion 143, the inner diameter of the ring element increases; therefore, the ring element is easily fitted into the annular groove 225 of the piston 128.

High-pressure gas is likely to pass into the fitting opening 148 of the upper ring element. The fitting opening 148 of the lower ring element is disposed at a position circumferentially deviated from the fitting opening 148 of the upper ring element. Therefore, the fitting opening 148 of the upper ring element is closed by the lower ring element in the axial direction. Consequently, the lower ring element serves to prevent gas from leaking out through the fitting opening 148 of the upper ring element.

PI, PEEK, PBI, PTFE, or modified PTFE that may be selected as a main component of the ring elements does not include sulfur. Therefore, the compressor 100 is suitably applicable to the technical field (for example, supply of hydrogen to a fuel cell vehicle) in which mixture of sulfur into gas is not preferred. In other words, the compressor 100 may be suitably applied to a hydrogen station configured to supply hydrogen to a fuel cell vehicle. In this case, gas compressed by the compressor 100 is hydrogen gas. However, the compressor 100 may be applied to compression of other kinds of gas.

The additive amount of carbon filler that may be applied as an additive to the ring elements is in a range of 5% by mass or greater to 40% by mass or smaller.

When polyamide-imide is added as an additive to the ring elements, the ring elements may be easily molded.

The relationship of hardness and material among the first to third packing parts 151 to 153 is similar to the relationship of hardness and material among the first to third sealing parts 145 to 147. Therefore, the first to third packing parts 151 to 153 can exert superior sealing performance over a long period of time in the same way as the first to third sealing parts 145 to 147.

Regarding the foregoing embodiment, the first to third sealing parts 145 to 147 are formed of a total of eight piston rings. How many piston rings are attached to the outer circumference of the piston 128 may be determined based on the estimated largest gas pressure. Therefore, how many piston rings are attached to the outer circumference of the piston 128 should not be interpreted in a limited way.

Regarding the foregoing embodiment, each of the first to third sealing parts 145 to 147 may be formed of plural piston rings. However, how many piston rings form each of the first to third sealing parts 145 to 147 may be determined based on the estimated largest gas pressure.

Regarding the foregoing embodiment, the first to third packing parts 151 to 153 are applied. However, instead of the third packing part 153, the second packing part 152 may be applied.

Regarding the foregoing embodiment, the rod packings differing from in material and hardness are applied as the first to third packing parts 151 to 153. However, rod packings having the same material and hardness may be applied.

### [Second Embodiment]

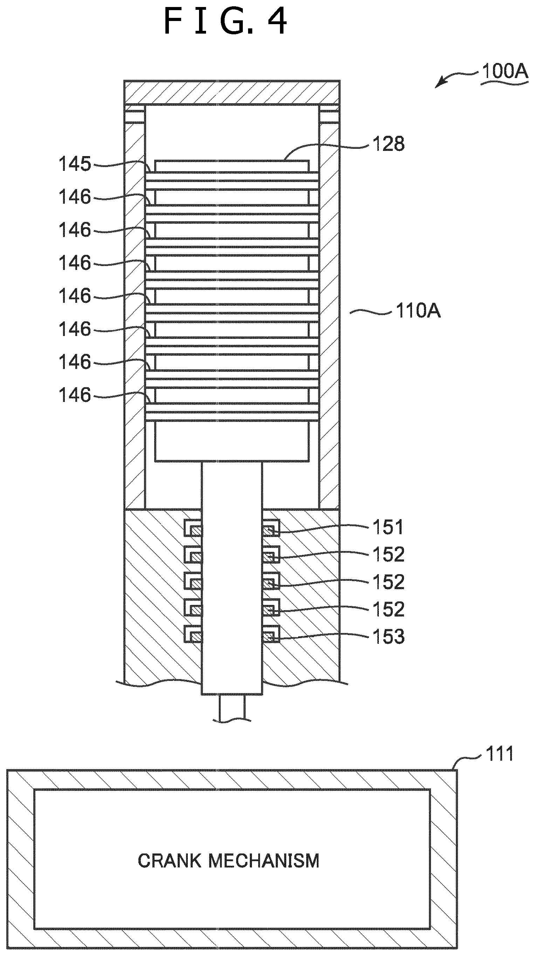

FIG. 4 is a schematic cross-sectional view of a reciprocating compressor (hereinafter referred to as "compressor 100A") according to a second embodiment of the present invention. The compressor 100A is different from the compressor 100 of the first embodiment only in that the compressor 100A does not include the third sealing part 147 described related to the first embodiment. The compressor 100A will be described with reference to FIG. 4.

Regarding a cylinder structure 110A of the compressor 100A, the second sealing part 146 is attached to the outer circumference of the piston 128 instead of the third sealing part 147 described related to the first embodiment.

When pressure of gas to be compressed does not increase so much, a pressure difference between the upper surface and the lower surface of the piston ring located on the lowest level among the plural piston rings forming the second sealing part 146 does not increase so much. In this case, the second sealing part 146 relatively soft can be used instead of the third sealing part 147. The second sealing part 146 is superior in sealing performance to the third sealing part 147; therefore, leaking of gas to the non-compression chamber 132 is effectively prevented.

Note that the first to third packing parts 151 to 153 described related to the first embodiment can be applied to the compressor 100A.

### [Third Embodiment]

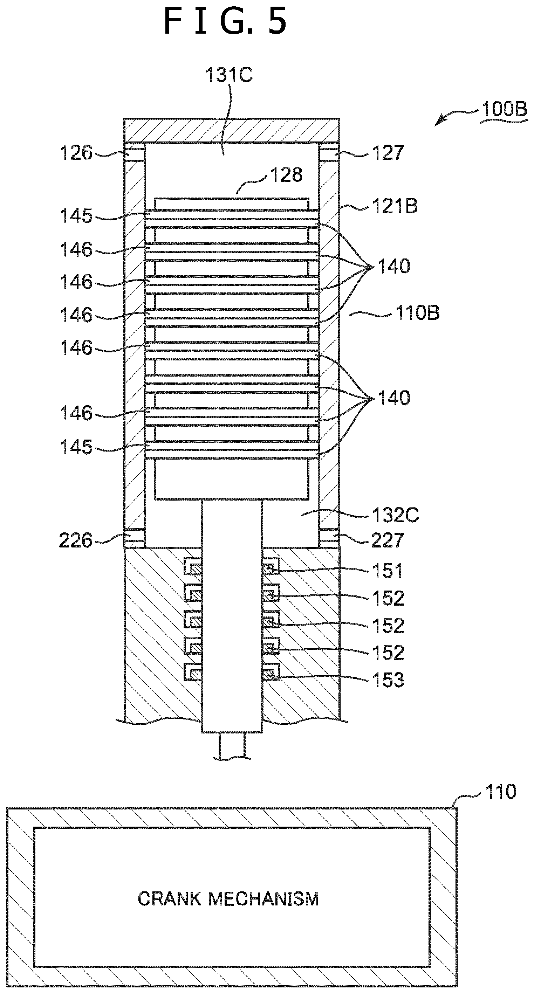

FIG. 5 is a schematic cross-sectional view of a reciprocating compressor (hereinafter referred to as "compressor 100B") according to a third embodiment of the present invention. The compressor 100B includes two compression chambers. The compressor 100B will be described with reference to FIG. 5.

A cylinder structure 110B of the compressor 100B includes a cylinder 121B instead of the cylinder 121. The cylinder 121B and the piston 128 form the two compression chambers. The compression chamber formed on the upper side of the piston 128 will be referred to as "first compression chamber 131C" in the following descriptions. The first compression chamber 131C is a space coinciding with the compression chamber 131 described related to the first embodiment. Descriptions of the compression chamber 131 are incorporated in the first compression chamber 131C. The compression chamber formed on the lower side of the piston 128 will be referred to as "second compression chamber 132C" in the following descriptions.

An inflow port 226 and an outflow port 227 are formed in the cylinder 121B to be located near a lower end of the cylinder 121B. The inflow port 226 and the outflow port 227 are communicated with the second compression chamber 132C. The inflow port 226 is utilized to supply gas to the second compression chamber 132C, and the outflow port 227 is utilized to discharge gas from the second compression chamber 132C. Corresponding check valves (not illustrated) are attached to the inflow port 226 and the outflow port 227. The check valve for the inflow port 226 allows inflow of gas to the second compression chamber 132C while not allowing outflow of gas from the second compression chamber 132C. The check valve for the outflow port 227 allows outflow of gas from the second compression chamber 132C when pressure of the gas in the second compression chamber 132C exceeds a certain threshold. Meanwhile, the check valve for the outflow port 227 does not allow inflow of gas to the second compression chamber 132C. The gas supplied into the second compression chamber 132C is compressed by the piston 128 moving toward the lower dead point.

The piston ring located on the highest level (that is, the piston ring arranged most adjacent to the first compression chamber 131C) is attached to the outer circumference of the piston 128 to be located closer to the first compression chamber 131C than any other piston rings are to the first compression chamber 131C. The piston ring located on the lowest level (that is, the piston ring arranged most adjacent to the second compression chamber 132C) is attached to the outer circumference of the piston 128 to be located closer to the second compression chamber 132C than any other piston rings are to the second compression chamber 132C. The piston rings serving as opposite ends of a row of the piston rings are each formed as the foregoing first sealing part 145. The residual piston rings are each formed as the foregoing second sealing part 146.

The two compression chambers 131C, 132C are formed on the opposite ends of the piston 128; therefore, compressed gas is effectively generated.

The two first sealing parts 145 respectively located close to the first compression chamber 131C and the second compression chamber 132C are relatively hard and thus can maintain the sealing shapes over a long period of time against an impact force caused by gas compressed in the first compression chamber 131C and the second compression chamber 132C. The second sealing parts 146 aligned between the first sealing parts 145 are protected by the first sealing parts 145 from the foregoing impact force and therefore do not receive a large impact force compared with the first sealing parts 145. Consequently, the second sealing parts 146 can maintain the sealing shapes over a long period of time.

The compressor 100C includes more second sealing parts 146 than the compressor 100 of the first embodiment. The second sealing part 146 has superior sealing performance; therefore, gas is effectively prevented from reciprocating between the first compression chamber 131C and the second compression chamber 132C.

### [Forth Embodiment]

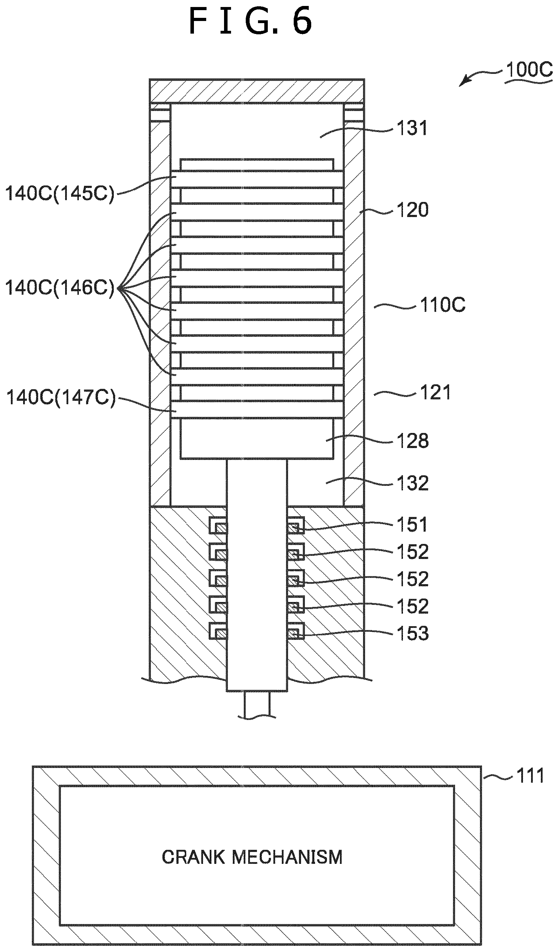

FIG. 6 is a schematic cross-sectional view of a reciprocating compressor (hereinafter referred to as "compressor 100C") according to a fourth embodiment not claimed. The compressor 100C is different from the compressor 100 of the first embodiment only in piston ring structure. The compressor 100C will be described with reference to FIG. 6.

The piston ring of a cylinder structure 110C of the compressor 100C are different from the foregoing piston ring having a two-layer structure in that the piston ring of the cylinder structure 110C has a single-layer structure. In other words, the piston ring of the cylinder structure 110C cannot be divided into two ring elements but has an integral structure.

The piston ring located on the highest level is a first sealing part 145C formed mainly containing a sealing material that may be selected as a main component of the first sealing part 145. The piston ring located on the lowest level is a third sealing part 147C formed mainly containing a sealing material that may be selected as a main component of the third sealing part 147. The residual piston rings are second sealing parts 146C each formed mainly containing a sealing material that may be selected as a main component of the soft ring element 243.

The first sealing part 145C and the third sealing part 147C respectively located close to the compression chamber 131 and the non-compression chamber 132 are hard. Therefore, the desired sealing performance to the first sealing part 145C and the third sealing part 147C can be maintained over a long period of time. The second sealing part 146C is relatively soft and therefore closely adheres to the inner circumferential surface of the cylinder 121 and holds high sealing performance.

The configuration described related to the foregoing embodiments is merely an example and should not be interpreted in a limited way. Various changes or modifications may be added to the configuration described related to the foregoing embodiments, without departing from the scope of the appended claims.

### [Industrial Applicability]

The techniques described related to the foregoing embodiments are suitably utilized in various technical fields that require compression of gas.

The present invention discloses a compressor configured to compress gas. The compressor includes: a cylinder part; a piston disposed in the cylinder part to form in the cylinder part a compression chamber in which the gas is compressed, the piston being configured to compress the gas in the compression chamber; a first sealing part located adjacent to the compression chamber and attached to an outer circumference of the piston, and formed mainly containing at least one type of component that is selected from a group of polyetheretherketone, polyimide, and polybenzimidazole; and a second sealing part located more separated from the compression chamber than the first sealing part is from the compression chamber and attached to the outer circumference of the piston, the second sealing part having a hardness equal to or smaller than that of the first sealing part.

## Claims

1. A compressor (100; 100A; 100B) configured to compress gas, the compressor comprising:
a cylinder part (120);
a piston (128) disposed in the cylinder part to form in the cylinder part a compression chamber (131; 131C) in which the gas is compressed, the piston being configured to compress the gas in the compression chamber;
a first sealing part (145) attached to an outer circumference of the piston and formed mainly containing at least one type of component that is selected from a group of polyetheretherketone, polyimide, and polybenzimidazole; and
a second sealing part (146) located more separated from the compression chamber than the first sealing part is from the compression chamber and attached to the outer circumference of the piston, the second sealing part having a hardness equal to or smaller than that of the first sealing part,
**characterized in that**
the first sealing part includes two ring elements (241, 242) respectively extending circumferentially along the outer circumference of the piston,
fitting openings (148) extending from an outer circumference to an inner circumference of each of the two ring elements are respectively formed in the two ring elements, and
the two ring elements are overlapped in the axial direction of the cylinder part and attached to the outer circumference of the piston such that the fitting openings of the two ring elements are not overlapped with each other,
wherein the second sealing part includes: a soft ring element (243) formed mainly containing at least one type of component that is selected from a group of polytetrafluoroethylene and modified polytetrafluoroethylene; and a hard ring element (244) formed mainly containing at least one type of component that is selected from a group of polyetheretherketone, polyimide, and polybenzimidazole, the hard ring element being overlapped with the soft ring element from the opposite side from the compression chamber.

2. The compressor according to claim 1, further comprising a third sealing part (147) located on the opposite side of the second sealing part from the first sealing part in an axial direction of the cylinder part and attached to the outer circumference of the piston,
wherein the piston and the cylinder part form a non-compression chamber (132) located on the opposite side of the piston from the compression chamber, and
the third sealing part is located closer to the non-compression chamber than the second sealing part is to the non-compression chamber and is formed mainly containing at least one type of component that is selected from a group of polyetheretherketone, polyimide, and polybenzimidazole.

3. The compressor according to claim 1, wherein the piston and the cylinder part form the compression chamber of a first compression chamber (131C) and a second compression chamber (132C) that is located on the opposite side from the first compression chamber in the axial direction of the cylinder part, and
the first sealing part includes a plurality of the first sealing parts respectively located closer to the first compression chamber and the second compression chamber than the second sealing part is to the first compression chamber and the second compression chamber, the first sealing parts being attached to the outer circumference of the piston.

4. The compressor according to claim 1, 2, or 3, further comprising a crank mechanism (111; 110) formed to reciprocate the piston in the cylinder part.

5. The compressor according to claim 4, comprising a piston rod (129) configured to transmit driving force of the crank mechanism to the piston; a first packing part (151) configured to seal a space between the cylinder part and an outer circumference of the piston rod; and a second packing part (152) located closer to the crank mechanism than the first packing part is to the crank mechanism and configured to seal a space between the cylinder part and the outer circumference of the piston rod,
wherein the first packing part is formed mainly containing at least one type of component that is selected from a group of polyetheretherketone, polyimide, and polybenzimidazole, and
the second packing part is softer than the first packing part.

## Patentansprüche

1. Kompressor (100; 100A; 100B), der zum Komprimieren von Gas eingerichtet ist, wobei der Kompressor Folgendes umfasst:
ein Zylinderteil (120);
einen Kolben (128), der in dem Zylinderteil angeordnet ist, um in dem Zylinderteil eine Kompressionskammer (131; 131C) zu bilden, in der das Gas komprimiert wird, wobei der Kolben eingerichtet ist, um das Gas in der Kompressionskammer zu komprimieren;
ein erstes Dichtungsteil (145), das an einem Außenumfang des Kolbens angebracht ist und hauptsächlich mindestens eine Art von Komponente enthält, die aus einer Gruppe von Polyetheretherketon, Polyimid und Polybenzimidazol ausgewählt ist; und
ein zweites Dichtungsteil (146), das sich weiter von der Kompressionskammer entfernt befindet als sich das erste Dichtungsteil von der Kompressionskammer entfernt befindet und am Außenumfang des Kolbens angebracht ist, wobei das zweite Dichtungsteil eine Härte aufweist, die gleich oder kleiner als die des ersten Dichtungsteils ist,
**dadurch gekennzeichnet, dass**
das erste Dichtungsteil zwei Ringelemente (241, 242) aufweist, die sich jeweils in Umfangsrichtung entlang des Außenumfangs des Kolbens erstrecken,
in den beiden Ringelementen jeweils Passöffnungen (148) ausgebildet sind, die sich von einem Außenumfang zu einem Innenumfang jedes der beiden Ringelemente erstrecken, und
die beiden Ringelemente in axialer Richtung des Zylinderteils überlappen und am Außenumfang des Kolbens so angebracht sind, dass die Passöffnungen der beiden Ringelemente nicht miteinander überlappen,
wobei das zweite Dichtungsteil Folgendes aufweist: ein weiches Ringelement (243), das hauptsächlich mindestens eine Art von Komponente enthält, die aus einer Gruppe von Polytetrafluorethylen und modifiziertem Polytetrafluorethylen ausgewählt ist; und ein hartes Ringelement (244), das hauptsächlich mindestens eine Komponente enthält, die aus einer Gruppe bestehend aus Polyetheretherketon, Polyimid und Polybenzimidazol ausgewählt ist, wobei das harte Ringelement mit dem weichen Ringelement von der der Kompressionskammer gegenüberliegenden Seite überlappt.

2. Kompressor gemäß Anspruch 1, der ferner ein drittes Dichtungsteil (147) umfasst, das sich auf der gegenüberliegenden Seite des zweiten Dichtungsteils vom ersten Dichtungsteil in axialer Richtung des Zylinderteils befindet und am Außenumfang des Kolbens angebracht ist,
wobei der Kolben und das Zylinderteil eine Nicht-Kompressionskammer (132) bilden, die sich auf der gegenüberliegenden Seite des Kolbens von der Kompressionskammer befindet, und
das dritte Dichtungsteil sich näher an der Nicht-Kompressionskammer befindet als sich das zweite Dichtungsteil an der Nicht-Kompressionskammer befindet und hauptsächlich mindestens eine Art von Komponente enthält, die aus einer Gruppe von Polyetheretherketon, Polyimid und Polybenzimidazol ausgewählt ist.

3. Kompressor gemäß Anspruch 1, wobei der Kolben und das Zylinderteil die Kompressionskammer einer ersten Kompressionskammer (131C) und einer zweiten Kompressionskammer (132C) bilden, die sich auf der gegenüberliegenden Seite der ersten Kompressionskammer in axialer Richtung des Zylinderteils befindet, und
das erste Dichtungsteil eine Vielzahl von ersten Dichtungsteilen umfasst, die sich jeweils näher an der ersten Kompressionskammer und der zweiten Kompressionskammer befinden als sich das zweite Dichtungsteil an der ersten Kompressionskammer und der zweiten Kompressionskammer befindet, wobei die ersten Dichtungsteile am Außenumfang des Kolbens angebracht sind.

4. Kompressor gemäß Anspruch 1, 2 oder 3, der ferner einen Kurbelmechanismus (111; 110) umfasst, der ausgebildet ist, um den Kolben im Zylinderteil hin und her zu bewegen.

5. Kompressor gemäß Anspruch 4 mit einer Kolbenstange (129), die eingerichtet ist, um die Antriebskraft des Kurbelmechanismus auf den Kolben zu übertragen; einem ersten Dichtungsteil (151), das eingerichtet ist, um einen Raum zwischen dem Zylinderteil und einem Außenumfang der Kolbenstange abzudichten; und einem zweiten Dichtungsteil (152), das sich näher am Kurbelmechanismus befindet als sich das erste Dichtungsteil am Kurbelmechanismus befindet und eingerichtet ist, um einen Raum zwischen dem Zylinderteil und dem Außenumfang der Kolbenstange abzudichten,
wobei das erste Dichtungsteil hauptsächlich mindestens eine Art von Komponente enthält, die aus einer Gruppe bestehend aus Polyetheretherketon, Polyimid und Polybenzimidazol ausgewählt ist, und
das zweite Dichtungsteil weicher ist als das erste Dichtungsteil.

## Revendications

1. Compresseur (100 ; 100A ; 100B) configuré pour comprimer du gaz, le compresseur comprenant :
une partie cylindre (120) ;
un piston (128) disposé dans la partie cylindre pour former dans la partie cylindre une chambre de compression (131 ; 131C) dans laquelle le gaz est comprimé, le piston étant configuré pour comprimer le gaz dans la chambre de compression ;
une première partie d'étanchéité (145) fixée à une circonférence extérieure du piston et formée principalement en contenant au moins un type de composant qui est sélectionné parmi un groupe de polyétheréthercétone, de polyimide et de polybenzimidazole ; et
une deuxième partie d'étanchéité (146) située plus éloignée de la chambre de compression que la première partie d'étanchéité ne l'est de la chambre de compression et fixée à la circonférence extérieure du piston, la deuxième partie d'étanchéité ayant une dureté égale ou inférieure à celle de la première partie d'étanchéité,
**caractérisé en ce que**
la première partie d'étanchéité comporte deux éléments annulaires (241, 242) s'étendant respectivement circonférentiellement le long de la circonférence extérieure du piston,
des ouvertures d'ajustement (148) s'étendant d'une circonférence extérieure à une circonférence intérieure de chacun des deux éléments annulaires sont respectivement formées dans les deux éléments annulaires, et
les deux éléments annulaires se chevauchent dans la direction axiale de la partie cylindre et sont fixés à la circonférence extérieure du piston de telle sorte que les ouvertures d'ajustement des deux éléments annulaires ne se chevauchent pas entre elles,
dans lequel la deuxième partie d'étanchéité comporte : un élément annulaire souple (243) formé principalement en contenant au moins un type de composant choisi parmi un groupe de polytétrafluoroéthylène et de polytétrafluoroéthylène modifié ; et un élément annulaire dur (244) formé principalement en contenant au moins un type de composant choisi parmi un groupe de polyétheréthercétone, polyimide et polybenzimidazole, l'élément annulaire dur étant superposé à l'élément annulaire souple depuis le côté opposé à la chambre de compression.

2. Compresseur selon la revendication 1, comprenant en outre une troisième partie d'étanchéité (147) située sur le côté opposé de la deuxième partie d'étanchéité par rapport à la première partie d'étanchéité dans une direction axiale de la partie cylindre et fixée à la circonférence extérieure du piston,
dans lequel le piston et la partie cylindre forment une chambre sans compression (132) située sur le côté opposé du piston par rapport à la chambre de compression, et
la troisième partie d'étanchéité est située plus près de la chambre de non-compression que la deuxième partie d'étanchéité ne l'est de la chambre de non-compression et est formée principalement en contenant au moins un type de composant qui est sélectionné parmi un groupe de polyétheréthercétone, polyimide et polybenzimidazole.

3. Compresseur selon la revendication 1, dans lequel le piston et la partie cylindre forment la chambre de compression d'une première chambre de compression (131C) et d'une deuxième chambre de compression (132C) qui est située du côté opposé à la première chambre de compression dans la direction axiale de la partie cylindre, et
la première partie d'étanchéité comporte une pluralité de premières parties d'étanchéité situées respectivement plus près de la première chambre de compression et de la deuxième chambre de compression que la deuxième partie d'étanchéité ne l'est de la première chambre de compression et de la deuxième chambre de compression, les premières parties d'étanchéité étant fixées à la circonférence extérieure du piston.

4. Compresseur selon la revendication 1, 2 ou 3, comprenant en outre un mécanisme à manivelle (111 ; 110) formé pour faire aller et venir le piston dans la partie cylindre.

5. Compresseur selon la revendication 4, comprenant une tige de piston (129) configurée pour transmettre la force d'entraînement du mécanisme à manivelle au piston ; une première partie d'étanchéité (151) configurée pour sceller un espace entre la partie cylindre et une circonférence extérieure de la tige de piston ; et une deuxième partie d'étanchéité (152) située plus près du mécanisme à manivelle que la première partie d'étanchéité ne l'est du mécanisme à manivelle et configurée pour sceller un espace entre la partie cylindre et la circonférence extérieure de la tige de piston,
dans lequel la première partie d'étanchéité est formée en contenant principalement au moins un type de composant qui est sélectionné parmi un groupe de polyétheréthercétone, polyimide et polybenzimidazole, et
la deuxième partie d'étanchéité est plus souple que la première partie d'étanchéité.
